# EUROPÄISCHE PATENTANMELDUNG

(11) **EP 1 584 557 A1**
(43) Veröffentlichungstag der Anmeldung: **12.10.2005**
(21) Anmeldenummer: 05006517.6
(22) Anmeldetag: 24.03.2005
(51) Int. Cl.: B65B 9/20

(54) **Vertikale Schlauchbeutelmaschine zum Verpacken horizontal ausgerichteter Gegenstandsgruppen**

(30) Priorität: 03.04.2004 DE 102004016500
(71) Anmelder: ROVEMA VERPACKUNGSMASCHINEN GMBH, 35463 Fernwald (DE)
(72) Erfinder: Kuss, Gerhard, 35584 Wetzlar (DE); Nicolai, Torsten, 35418 Buseck (DE); Baur, Walter, Dr., 63584 Gründau (DE)

(57) **Zusammenfassung**

Um mittels einer vertikalen Schlauchbeutelmaschine (1) Stapel aus horizontal ausgerichteten, flachen, vorzugsweise scheibenförmigen, aus einem oder mehreren Gegenständen (18) gebildeten Gegenstandsgruppen (23) in Schlauchbeutel (16) einzubringen, wird vorgeschlagen, dass ein vertikales Füllrohr (6) bezüglich seines Querschnittes an die horizontalen Abmessungen der Gegenstandsgruppe (23) angepasst ist, wobei die Breite (19) und die Tiefe (20) des Füllrohres (6) der Breite (21) und Tiefe (22) der Gegenstandsgruppe (23) derart angemessen sind, und die Gegenstandsgruppe (23) derart oberhalb des Füllrohres (6) platziert ist, dass auf gegenüberliegenden Seiten der Gegenstandsgruppe (23) jeweils zwischen einem äußeren Rand (24) der Gegenstandsgruppe (23) und der inneren Oberfläche (25) des Füllrohres (6) ein erster gleicher Abstand (26) in Richtung der Breite (19) und ebenso ein zweiter gleicher Abstand (27) in Richtung der Tiefe (20) des Füllrohres (6) vorgesehen ist, dass diese Abstände (26, 27) nicht alle den Wert Null haben, dass das Füllrohr (6) einen zu Symmetrieachsen (28, 29) der Gegenstandsgruppe (23) symmetrischen Querschnitt aufweist, und dass zwei gegenüberliegende, zueinander parallele in Transportrichtung (10) sich erstreckende Rohrsegmente (30, 31) des Füllrohres (6) vorgesehen sind, an welchen Folienabzüge (8) der Schlauchbeutelmaschine (1) angreifen.

## Beschreibung

Die Erfindung betrifft die Verpackungsbranche und dort eine vertikale Schlauchbeutelmaschine mit einer von einer Vorratsrolle abgewickelten Folienbahn. Eine derartige Maschine weist eine Formschulter zum Umformen der Folienbahn zu einem Folienschlauch auf und ein vertikal ausgerichtetes Füllrohr, welches den Folienschlauch aufnimmt und durch das eine Befüllung des Folienschlauches möglich ist. Eine Befüllstation oberhalb des Füllrohres dient dieser Befüllung. Zwei von gegenüberliegenden Seiten des Füllrohres gegen den Folienschlauch und damit gegen das Füllrohr wirkende Folienabzüge sind zum Weitertransportieren der Folienbahn und des Folienschlauches vorgesehen. Eine Längssiegeleinrichtung dient zum Verschweißen des Folienschlauches mittels einer in Transportrichtung ausgerichteten Längsnaht und eine Quersiegeleinrichtung mit zwei gegeneinander beweglichen, den Folienschlauch quer verschweißenden Schweißbacken zum Erzeugen von Kopfnähten und Bodennähten von Schlauchbeuteln. Mittels einer Trenneinrichtung werden die fertiggestellten Schlauchbeutel vom Folienschlauch abgetrennt.

Derartige vertikale Schlauchbeutelmaschinen sind hinlänglich bekannt. Sie dienen in der Regel zum Abpacken fließfähiger oder riesenfähiger Produkte, wie z. B. Granulate. Prinzipiell kann auch stückiges Produkt verpackt werden.

Die bekannten vertikalen Schlauchbeutelmaschinen haben den Nachteil, dass sie zum Abpacken einer Reihe von Gegenstandsgruppen in Form eines in Schlauchbeutel erzeugten Stapels wenig geeignet sind, da sich die Gruppen während ihres freien Falls im Füllrohr drehen und somit unkontrollierbar im verschweißten Ende des Folienschlauches landen. Unter Gegenstandsgruppe ist im Rahmen dieser Anmeldung aus Vereinfachungsgründen entweder ein einziger, horizontal ausgerichteter Gegenstand wie z. B. ein Kaffeepad gemeint oder eine Gruppe von zwei oder mehr in horizontaler Richtung direkt nebeneinander angeordneter Gegenstände (wie z. B. Kaffeepads).

Wegen dieser Fallproblematik werden horizontale Gegenstandsgruppen (Einzel-, Doppel-, Dreifachgruppe, ...) nicht mittels vertikaler Schlauchbeutelmaschinen verpackt. Statt dessen werden diese Gruppen in zuvor erzeugte, standfähige Leerbeutel hinein gestapelt, was vergleichsweise aufwändig und damit teuer ist, da zum Erzeugen der Leerbeutel ohnehin eine vertikale Schlauchbeutelmaschine genutzt wird.

Der Erfindung liegt die Aufgabe zu Grunde, eine vertikale Schlauchbeutelmaschine derart auszuführen, dass sie zum Abpacken von Gegenstandsgruppen, die einen Stapel im Schlauchbeutel bilden sollen, genutzt werden kann.

Gelöst ist die Aufgabe gemäß dem kennzeichnenden Teil des Anspruchs 1. Danach ist die Befüllstation zum Abgeben jeweils einer horizontal ausgerichteten flachen, vorzugsweise scheibenförmigen, aus einem oder mehreren Gegenstände gebildeten Gegenstandsgruppe vorgesehen, ist das Füllrohr bezüglich seines Querschnittes an die horizontalen' Abmessungen der Gegenstandsgruppe angepasst indem die Breite und die Tiefe des Füllrohres der Breite und der Tiefe einer Gegenstandsgruppe derart abgemessen sind, und die Gegenstandsgruppe derart oberhalb des Füllrohres platziert, dass auf gegenüberliegenden Seiten der Gegenstandsgruppe jeweils zwischen dem äußeren Rand der Gegenstandsgruppe und der inneren Oberfläche des Füllrohres ein erster gleicher Abstand in Richtung der Breite und ebenso ein zweiter gleicher Abstand in Richtung der Tiefe des Füllrohres vorkommt. Diese Abstände haben nicht alle den Wert Null. Das Füllrohr weist einen zu zwei Symmetrieachsen der Gegenstandsgruppe symmetrischen Querschnitt auf, und zwei gegenüberliegende, zueinander parallele, in Transportrichtung sich erstreckende Rohrsegmente des Füllrohres sind dazu vorgesehen, dass an ihnen die Folienabzüge angreifen.

Die vorgeschlagene vertikale Schlauchbeutelmaschine ist geeignet, um Gegenstandsgruppen annähernd horizontal direkt in Schlauchbeutel zu bringen, so dass derart ein Stapel Gegenstandsgruppen in Schlauchbeutel erzeugt wird. Eine exakte Horizontalausrichtung der Gegenstandsgruppen während der Einbringung ist nicht notwendig, da sich die Gegenstandsgruppen während ihrer Stapelung horizontal ausgerichteten, wenn sie zuvor keine zu große vertikale Ausrichtungskomponente aufwiesen. Diese Komponente ist minimiert, da das Füllrohr der Gegenstandsgruppe angepasst ist. So liegt zunächst auf jeweils einer gegenüberliegenden Seite (in horizontaler Richtung) ein gleicher Abstand zwischen der Gegenstandsgruppe und dem Füllrohr vor, was dazu führt, dass zu Beginn des freien Falls keine Kippmomente auf eine Gegenstandsgruppe wirken.

Weitere, vorteilhafte Ausgestaltungen der vorgeschlagenen Schlauchbeutelmaschine sind in den Ansprüchen 2 bis 4 beschrieben.

Eine günstige Horizontalausrichtung der Gegenstandsgruppen bleibt während ihres freien Falls im Füllrohr erhalten, wenn die Abstände analog Anspruch 2 einen Wert zwischen 0 und 10 mm haben. Dann ist die an den Gegenstandsgruppen vorbeigedrängte Luft jeweils an gegenüberliegenden Seiten in stabilisierender Weise gleich vorhanden oder in gleicher Weise kaum vorhanden. Der Gleichartigkeit der Luftströmung im Füllrohr wird auch entsprochen, wenn bei runden Gegenständen, insbesondere runden Kaffeepads, gemäß Anspruch 3 die Wände des Füllrohres, die einander gegenüber liegen, und die nicht zum Angreifen der Folienabzüge vorgesehen sind, einen nach außen hin weisenden Bogen, eine nach außen gerichtete Knickung oder mindestens zwei nach außen gerichtete Knickungen aufweisen. Dabei können sich die Rohrsegmente gänzlich über gegenüberliegende Wände erstrecken (Anspruch 4), um den Folienabzügen eine große Angriffsfläche zu bieten, was für einen korrekten Folienlauf von Vorteil ist.

Im folgenden wird die Erfindung an Hand Ausführungsbeispiele darstellender Figuren näher beschrieben. Es zeigt:
- Figur 1: in einer Seitenansicht eine vertikale Schlauchbeutelmaschine mit einer Befüllstation oberhalb eines vertikalen Füllrohres, um einen Stapel Gegenstandsgruppen in einem Schlauchbeutel zu erzeugen;
- Figur 2: in einem Schnitt entlang A-A der Figur 1 eine frei im Füllrohr fallende Gegenstandsgruppe, die aus zwei sich teilweise überlappenden Gegenständen gebildet wird, wobei der Füllrohrquerschnitt dieser Gegenstandsgruppe geometrisch angepasst ist;
- Figur 3: in einer Schnittdarstellung eine Gegenstandsgruppe, die nur aus einem Gegenstand gebildet wird in einem an diesen Gegenstand angepassten, teilweise bogenförmigen Füllrohr;
- Figur 4: in einer Schnittdarstellung das Objekt der Figur 3, jedoch mit geänderter Füllrohrabmessung;
- Figur 5: in einer Schnittdarstellung ein Objekt analog den Figuren 3 und 4, jedoch mit einem hinsichtlich der Breite des Gegenstandes angepassten Füllrohres, so dass in dieser Richtung der Gegenstand exakt in das Füllrohr passt;
- Figur 6: in einer Schnittdarstellung ein Objekt analog Figur 3, jedoch mit abgeknickten anstatt mit bogenförmigen Wänden des Füllrohres, sowie
- Figur 7: in einer Seitenansicht ein zu stapelnder Gegenstand.

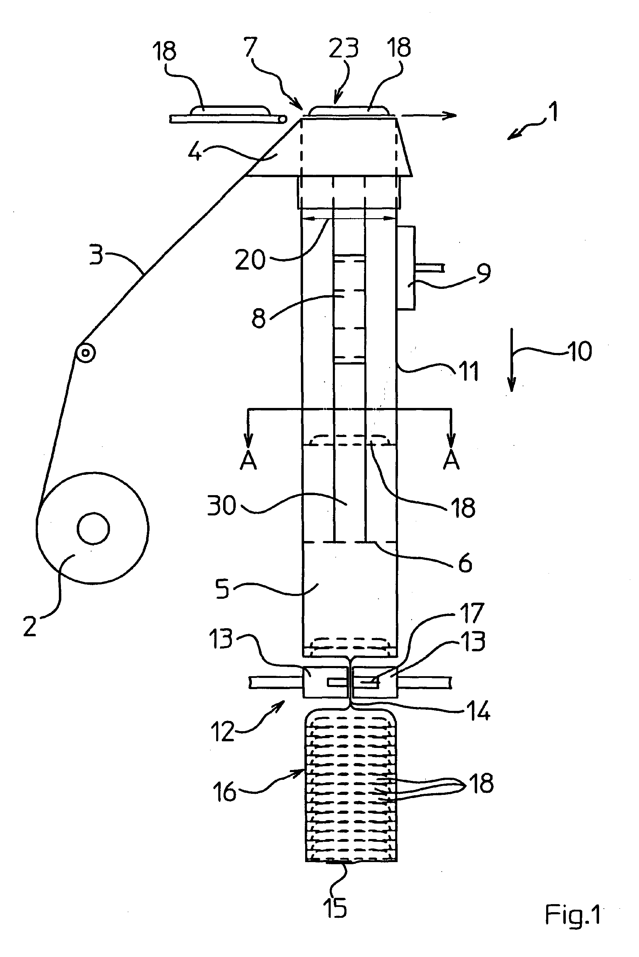

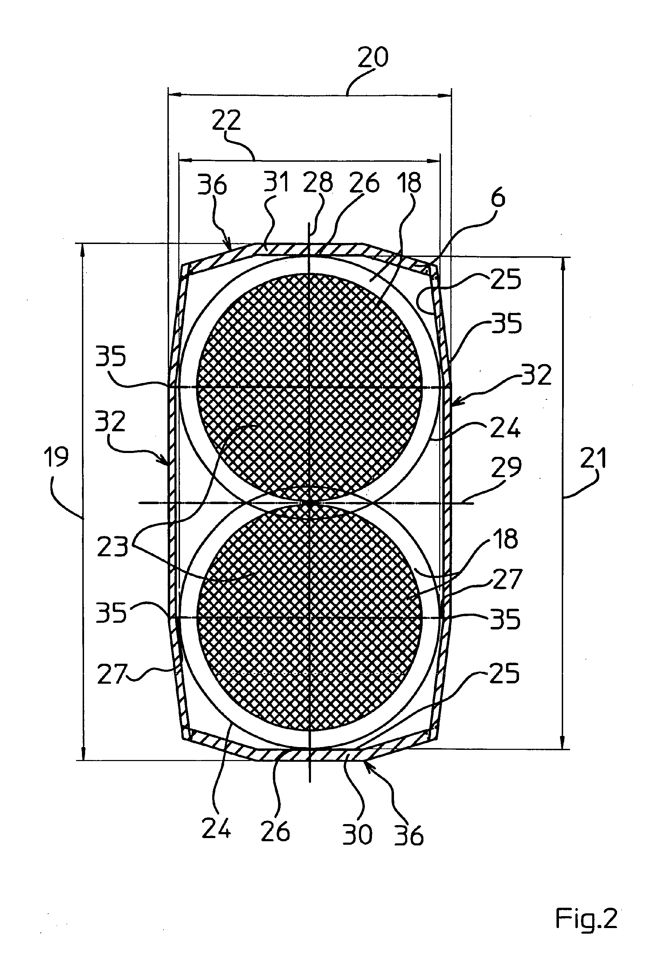

Bei einer vertikalen Schlauchbeutelmaschine 1 mit einer von einer Vorratsrolle 2 abgewickelten Folienbahn 3 dient eine Formschulter 4 zum Umformen der Folienbahn 3 zu einem Folienschlauch 5 (Figur 1). Ein vertikal ausgerichtetes Füllrohr 6 nimmt den Folienschlauch 5 auf und dient zur Befüllung des Folienschlauches 5 mittels einer Befüllstation 7 oberhalb des Füllrohres 6. Zwei von gegenüberliegenden Seiten des Füllrohres 6 gegen den Folienschlauch 5 und damit gegen das Füllrohr 6 wirkende Folienabzüge 8 sind zum Weitertransportieren der Folienbahn 3 und des Folienschlauches 5 vorgesehen. Eine Längssiegeleinrichtung 9 dient zum Verschweißen des Folienschlauches 5 mittels einer in Transportrichtung 10 ausgerichteten Längsnaht 11. Eine Quersiegeleinrichtung 12 mit zwei gegeneinander beweglichen, den Folienschlauch 5 quer verschweißenden Schweißbacken 13 ist zum Erzeugen von Kopfnähten 14 und Bodennähten 15 von Schlauchbeuteln 16 vorgesehen. Eine Trenneinrichtung 17 trennt die Schlauchbeutel 16 vom Folienschlauch 5 ab. Die Befüllstation 7 ist zum Abgeben jeweils einer horizontal ausgerichteten, flachen, scheibenförmigen, aus zwei Gegenständen 18 gebildeten Gegenstandsgruppe 23 vorgesehen. Das Füllrohr 6 ist bezüglich seines Querschnittes an die horizontalen Abmessungen dieser Gegenstandsgruppe 23 angepaßt (Figur 2), wobei die Breite 19 und die Tiefe 20 des Füllrohres 6 der Breite 21 und Tiefe 22 der Gegenstandsgruppe 23 derart angemessen sind, und die Gegenstandsgruppe 23 derart oberhalb des Füllrohres 6 plaziert ist, dass auf gegenüberliegenden Seiten der Gegenstandsgruppe 23 jeweils zwischen dem äußeren Rand 24 der Gegenstandsgruppe 23, und der inneren Oberfläche 25 des Füllrohres 6 ein erster gleicher Abstand 26, der den Wert Null hat, in Richtung der Breite 19 und ein zweiter gleicher Abstand 27, der einen Wert von ca. 1 mm hat, in Richtung der Tiefe 20 des Füllrohres 6 vorgesehen ist.

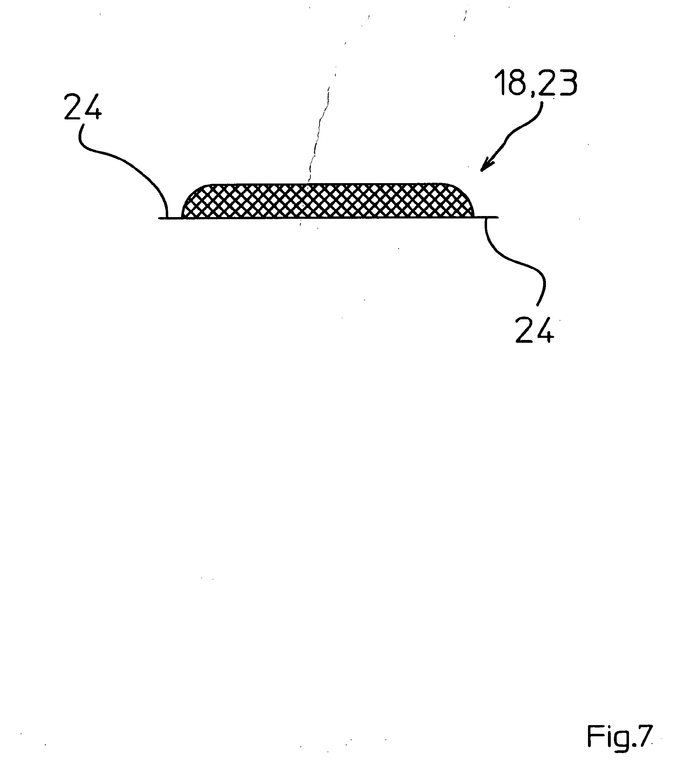

Die äußeren Ränder 24 der Gegenstände 18, welche Kaffeepads mit scheibenförmiger Bodenfolie sind (Figur 7) überlappen einander, so dass die Gegenstandsgruppe 23 dadurch etwas stabilisiert ist. Um den Strömungswiderstand durch die im Füllrohr 6 nach unten sich bewegende Gegenstandsgruppe 23 auf gegenüberliegenden Seiten der Gegenstandsgruppe 23 identisch zu haben, weist das Füllrohr 6 einen zu zwei rechtwinklig zueinander verlaufenden Symmetrieachsen 28, 29 der Gegenstandsgruppe 23 einen symmetrischen Querschnitt auf. Dazu weisen zwei Wände 32 des Füllrohres 6, die einander gegenüber liegen, und die nicht zum Angreifen der Folienabzüge 8 vorgesehen sind, jeweils zwei nach außen gerichtete Knickungen 35 auf, und in den beiden anderen Wänden sind ebenfalls jeweils doppelt geknickt, um zwei gegenüberliegende, zueinander parallele, in Transportrichtung 10 sich erstreckende Rohrsegmente 30, 31 des Füllrohres 6 auszubilden, an welchen die Folienabzüge 8 angreifen.

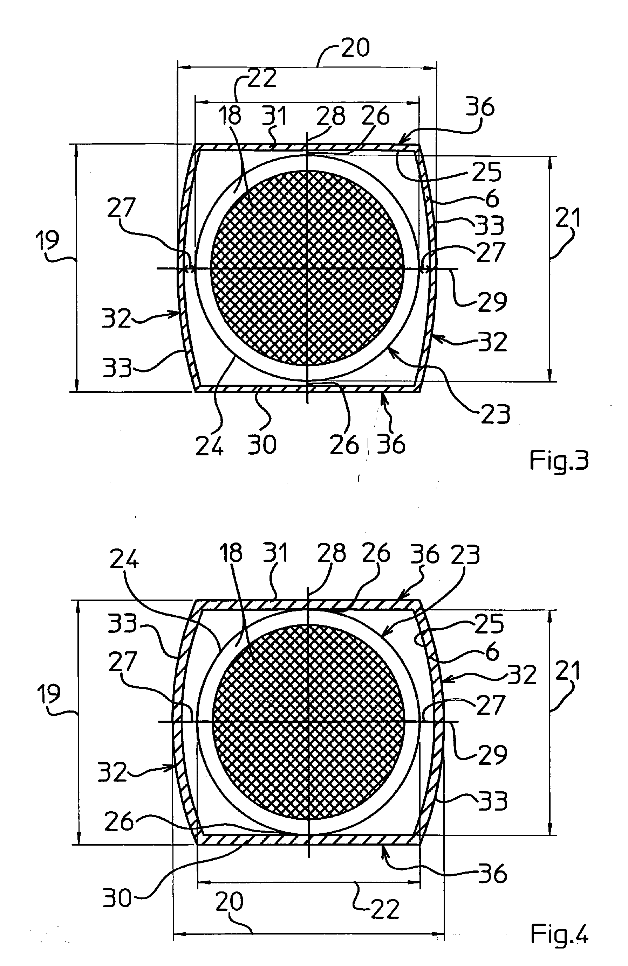

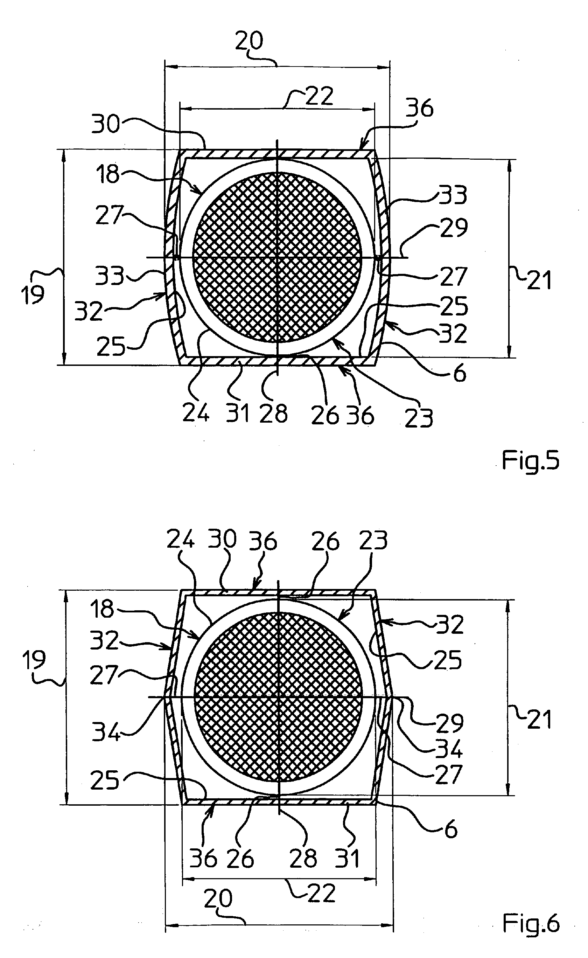

Bei einem zweiten Ausführungsbeispiel (Figuren 3 bis 6) erstrecken sich die Rohrsegmente 30, 31 gänzlich über gegenüberliegende Wände 36. Die beiden anderen Wände weisen entweder einen nach außen hin weisenden Bogen 33 (Figuren 3 bis 5) oder eine nach außen hin gerichtete Knickung 34 auf, um einen gleichartigen Luftstrom zwischen der Gegenstandsgruppe 23, die nur aus einem Gegenstand 18 besteht, und der inneren Oberfläche 25 des Füllrohres 6 zu erreichen.

Allen Ausführungsbeispielen ist gemeinsam, dass sich der Rand 24 (Figur 7) beim freien Fall nach oben biegen kann, sofern an einer Randstelle der Luftwiderstand relativ groß ist. Zudem können auch drei Gegenstände 18 eine Gegenstandsgruppe 23 bilden.
- 1: Schlauchbeutelmaschine
- 2: Vorratsrolle
- 3: Folienbahn
- 4: Formschulter
- 5: Folienschlauch
- 6: Füllrohr
- 7: Befüllstation
- 8: Folienabzug
- 9: Längssiegeleinrichtung
- 10: Transportrichtung
- 11: Längsnaht
- 12: Quersiegeleinrichtung
- 13: Schweißbacke
- 14: Kopfnaht
- 15: Bodennaht
- 16: Schlauchbeutel
- 17: Trenneinrichtung
- 18: Gegenstand
- 19: Breite des Füllrohres 6
- 20: Tiefe des Füllrohres 6
- 21: Breite einer Gegenstandsgruppe 23
- 22: Tiefe einer Gegenstandsgruppe 23
- 23: Gegenstandsgruppe
- 24: äußerer Rand
- 25: innere Oberfläche
- 26: Abstand in Richtung der Breite 19
- 27: Abstand in Richtung der Tiefe 20
- 28, 29: Symmetrieachse
- 30,31: Rohrsegmente
- 32: Wand
- 33: Bogen
- 34, 35: Knickung
- 36: Wand

## Patentansprüche

1. Vertikale Schlauchbeutelmaschine (1) mit einer von einer Vorratsrolle (2) abgewickelten Folienbahn (3), einer Formschulter (4) zum Umformen der Folienbahn (3) zu einem Folienschlauch (5), einem vertikal ausgerichteten Füllrohr (6), welches den Folienschlauch (5) aufnimmt und durch das eine Befüllung des Folienschlauches (5) möglich ist, einer Befüllstation (7) oberhalb des Füllrohres (6), zwei von gegenüberliegenden Seiten des Füllrohres gegen den Folienschlauch (5) und damit gegen das Füllrohr (6) wirkenden Folienabzügen (8) zum Weitertransportieren der Folienbahn (3) und des Folienschlauches (5), einer Längssiegeleinrichtung (9) zum Verschweißen des Folienschlauches (5) mittels einer in Transportrichtung (10) ausgerichteten Längsnaht (11), einer Quersiegeleinrichtung (12) mit zwei gegeneinander beweglichen, den Folienschlauch (5) quer verschweißenden Schweißbacken (13) zum Erzeugen von Kopfnähten (14) und Bodennähten (15) von Schlauchbeuteln (16), sowie einer Trenneinrichtung (17) zum Abtrennen der Schlauchbeutel (16) vom Folienschlauch (5), **dadurch gekennzeichnet, dass** die Befüllstation (7) zum Abgeben jeweils einer horizontal ausgerichteten flachen, vorzugsweise scheibenförmigen, aus einem oder mehreren Gegenständen (18) gebildeten Gegenstandsgruppe (23) vorgesehen ist, dass das Füllrohr (6) bezüglich seines Querschnittes an die horizontalen Abmessungen der Gegenstandsgruppe (23) angepasst ist, wobei die Breite (19) und die Tiefe (20) des Füllrohrs (6) der Breite (21) und Tiefe (22) einer Gegenstandsgruppe (23) derart angemessen sind, und die Gegenstandsgruppe (23) derart oberhalb des Füllrohres (6) platziert ist, dass auf gegenüberliegenden Seiten der Gegenstandsgruppe (23) jeweils zwischen dem äußeren Rand (24) der Gegenstandsgruppe (23) und der inneren Oberfläche (25) des Füllrohres (6) ein erster gleicher Abstand (26) in Richtung der Breite (19) und ebenso ein zweiter gleicher Abstand (27) in Richtung der Tiefe (20) des Füllrohres (6) vorgesehen ist, dass diese Abstände (26, 27) nicht alle den Wert Null haben, dass das Füllrohr (6) einen zu Symmetrieachsen (28, 29) der Gegenstandsgruppe (23) symmetrischen Querschnitt aufweist, und dass zwei gegenüberliegende, zueinander parallele in Transportrichtung (10) sich erstreckende Rohrsegmente (30, 31) des Füllrohres (6) vorgesehen sind, an welchen die Folienabzüge (8) angreifen.

2. Schlauchbeutelmaschine nach Anspruch 1, **dadurch gekennzeichnet, dass** die Abstände (26, 27) einen Wert zwischen Null und 10 mm haben.

3. Schlauchbeutelmaschine nach Anspruch 1 oder Anspruch 2, **dadurch gekennzeichnet, dass** Wände (32) des Füllrohres (6), die einander gegenüber liegen, und die nicht zum Angreifen der Folienabzüge (8) vorgesehen sind, einen nach außen hin weisenden Bogen (33), eine nach außen gerichtete Knickung (34) oder mindestens zwei nach außen gerichtete Knickungen (35) aufweisen.

4. Schlauchbeutelmaschine nach Anspruch 3, **dadurch gekennzeichnet, dass** sich die Rohrsegmente (30, 31) gänzlich über gegenüberliegende Wände (36) erstrecken.
